# EUROPÄISCHE PATENTANMELDUNG

(11) **EP 0 676 135 A1**
(43) Veröffentlichungstag der Anmeldung: **11.10.1995**
(21) Anmeldenummer: 95105014.5
(22) Anmeldetag: 04.04.1995
(51) Int. Cl.: A01K 1/015, B01J 20/24

(54) **Einstreu für Kleintiere und Katzen**

(30) Priorität: 06.04.1994 DE 4411766; 29.08.1994 DE 4430654
(71) Anmelder: Degenhard, Urbahn, D-59590 Geseke (DE)
(72) Erfinder: Degenhard, Urbahn, D-59590 Geseke (DE)

(57) **Zusammenfassung**

Die Erfindung betrifft ein Einstreumaterial für Kleintiere und Katzen, bestehend aus einem umweltfreundlich und leicht verrottbaren organischen Stoff, und ein Verfahren zur Herstellung dieses Einstreumaterials. Die Erfindung schlägt vor, daß als Einstreumaterial ausgelaugte, ausgepreßte und anschließend getrocknete Rübenschnitzel verwendet werden. Derartige Rübenschnitzel fallen bei der Zuckerherstellung aus Zuckerrüben an. Diese Rübenschnitzel können zur Erhöhung ihrer Saugfähigkeit noch pelletiert werden.

## Beschreibung

Die Erfindung betrifft Einstreu für Kleintiere und Katzen, bestehend aus einem umweltfreundlich und leicht verrottbaren, nachwachsenden organischen Stoff, welcher zu einem Granulat verarbeitet ist.

Aus der EP-B 0 310 016 ist ein Einstreumaterial für Kleintiere bekannt, welches aus Strohmehl hergestellt ist. Für die Herstellung wird getrocknetes Stroh zu Strohmehl vermahlen, aus dem Strohmehl durch Strangpressen Strohmehlbriketts hergestellt, die nachträglich zu unregelmäßigen Bruchstücken zerteilt werden. Dieses Granulat weist eine unregelmäßige Form auf, wodurch einmal eine möglichst große Außenfläche für ein Granulatstück mit bestimmtem Volumen geschaffen wird, wodurch die Saugfähigkeit erhöht und das Einstreu aufgrund der unregelmäßigen Außenfläche des Granulats ein schlechtes Fließverhalten zeigt. Letzteres hat den Vorteil, daß das Einstreu, wenn es von dem Tier betreten wird, nicht unter den Pfoten des Tieres "wegfließt".

Bei der Herstellung dieses bekannten Einstreumaterials wird zunächst das Stroh durch Häckseln zerkleinert, das Häcksel zu Strohmehl vermahlen, das Strohmehl pelletiert und anschließend die Pellets zerteilt. Dieses Einstreumaterial hat den Nachteil, daß das zunächst gebundene Strohmehl beim Transport oder bei der Nutzung des Einstreumaterials sich durch Reibung an der Außenfläche der Pellets wieder löst und beim Betreten des Einstreus durch die Tiere das Mehl an ihren Pfoten hängenbleibt und somit durch die Räume getragen wird.

Aufgabe der Erfindung ist es, ein Einstreu zu schaffen, welches einen hohen Faseranteil hat und aus einem Granulat besteht, welches eine hohe Saugfähigkeit aufweist, d. h. ein hohes Feuchtigkeitsaufnahmevermögen in kurzer Zeit hat.

Diese Aufgabe wird erfindungsgemäß dadurch gelöst, daß das Einstreu aus ausgelaugten, ausgepreßten und anschließend getrockneten Rübenschnitzeln besteht. Diese Rübenschnitzel sollen möglichst einen Feuchtegehalt von unter 15 % vorzugsweise unter 12 % haben, da sie sonst nach kurzer Lagerzeit eine Schimmelbildung zeigen.

Rübenschnitzel mit einem Feuchtegehalt von 12 % haben eine etwa doppelt so große Wasseraufnahmegeschwindigkeit wie die eingangs geschilderten Strohpellets und ebenfalls ein besseres Wasseraufnahmevermögen. Rübenschnitzel bestehen fast ausschließlich aus dem Ballaststoff der Rüben, das heißt aus Fasern. Dieses Fasermaterial zeigt durch Reibung oder Stöße beim Transport und nach seiner Nutzung keinen mehl- oder staubförmigen Abrieb auf, besitzt eine hohe Saugfähigkeit, weist aufgrund des Ineinanderverhakens der einzelnen Schnitzel nur eine geringe Fließfähigkeit auf und besitzt gegenüber den bekannten Granulaten ein geringes Volumengewicht.

Ausgelaugte, ausgepreßte und anschließend getrocknete Rübenschnitzel fallen bei der Zuckerherstellung aus Zuckerrüben in solch großen Mengen an, daß diese nur noch zum Teil genutzt werden. Die nicht nutzbare Menge der Zuckerrübenschnitzel wird einer Kompostierung zu ihrer Vernichtung zugeführt. Es ist darum ein weiterer Vorschlag der Erfindung, diese Zuckerrübenschnitzel als Einstreumaterial zu verwenden.

Weiterhin ist es wichtig, die Rübenschnitzel nicht wie bei der Verwendung als Zusatzfutter zu melassieren, da melassierte Rübenschnitzel für viele Kleintiere schmackhaft sind. Das Fressen dieser Schnitzel durch Tiere könnte wegen ihres starken Aufquellens im Verdauungstrakt zu lebensgefährlichen Blähungen führen.

Für bestimmte Tierrassen sind die Rübenschnitzel, insbesondere Zuckerrübenschnitzel, schmackhaft. Für diesen Fall ist es zweckmäßig, die Rübenschnitzel mit einem Geruchsüberdecker, wie z. B. Aromate, zu versehen. Diese Aromate können so ausgewählt werden, daß sie für bestimmte Tierrassen anlockend wirken. Weiterhin kann es vorteilhaft sein, wenn die Rübenschnitzel mit einer die Oberfläche glättenden und die Saugfähigkeit nicht oder nicht wesentlich reduzierenden Schicht versehen sind. Dazu können die Rübenschnitzel mit einer Gelatineschicht überzogen sein. Dieses hat den Vorteil, daß die Schnitzel nicht im Fell der Tiere haften bleiben und somit aus dem die Rübenschnitzel aufnehmenden Behältnis herausgetragen werden.

Aus dem gleichen Grund können die Rübenschnitzel zu Pellets verpreßt werden. Dieses hat noch den weiteren Vorteil, daß die pelletierten Rübenschnitzel eine höhere Wasseraufnahmegeschwindigkeit und ein höheres Wasseraufnahmevermögen haben. Das Wasseraufnahmevermögen wird durch das Pelletieren um nahezu 50 % erhöht, insbesondere dann, wenn die Pellets porös sind. Es hat sich gezeigt, daß 10 Gramm Rübenschnitzelpellets je nach Größe und Porösität zwischen 20 und 30 Gramm Wasser aufnehmen. Dagegen nehmen 10 Gramm Strohpellets etwa nur 15 Gramm Wasser auf. Auch die Wasseraufnahmegeschwindigkeit ist bei den pelletierten Rübenschnitzeln um 50 % höher als bei den nicht pelletierten Rübenschnitzeln und um das Dreifache höher als bei den Strohpellets.

Das Verfahren zur Herstellung von Einstreu aus einem umweltfreundlich und leicht verrottbaren, nachwachsenden organischen Stoff ist wie folgt:
- Die Rüben werden geschnitzelt,
- die Rübenschnitzel werden in erhitztem Wasser ausgelaugt,
- die ausgelaugten Rübenschnitzel werden durch Auspressen vorgetrocknet,
- in einem erhitzten Luft- oder Gasstrom werden die vorgetrockneten Rübenschnitzel endgetrocknet,
- die endgetrockneten Schnitzel werden pelletiert.

Die Endtrocknung der ausgepreßten Rübenschnitzel wird vorteilhafterweise in einem Trommeltrockner durchgeführt, wobei zur Trocknung ein Rauchgasstrom zugeführt wird. Das Pelletieren der Rübenschnitzel erfolgt in einer Kollerpresse. Sind die Rübenschnitzel z. B. wegen einer längeren Zwischenlagerung sehr stark getrocknet, erfolgt die Pelletierung unter Zuführung von Wasser. Damit die Pellets wegen der Zuführung des Wassers zum Pelletieren nicht einen zu hohen Feuchtegehalt haben und aus diesem Grunde schimmeln, werden die Pellets nachgetrocknet.

Da bei der Verwendung von Rübenschnitzeln diese als Abfallprodukt bei der Zuckerproduktion zunächst gesammelt werden, ist es vorteilhaft, diese Zuckerrübenschnitzel vor ihrem Pelletieren zu erwärmen. Dadurch lassen sie sich besser pelletieren und geben bei ihrem Erkalten Feuchte ab, so daß ein Nachtrocknen möglicherweise entfallen kann.

## Patentansprüche

1. Einstreu für Kleintiere und Katzen, bestehend aus einem umweltfreundlich und leicht verrottbaren, nachwachsenden organischen Stoff, welcher zu einem Granulat verarbeitet ist, dadurch gekennzeichnet, daß es aus ausgelaugten, ausgepreßten und anschließend getrockneten Rübenschnitzeln besteht.

2. Einstreu nach Anspruch 1, dadurch gekennzeichnet, daß bei der Zuckerherstellung aus Zuckerrüben anfallende Rübenschnitzel verwendet werden.

3. Einstreu nach Anspruch 1 oder 2, dadurch gekennzeichnet, daß die Rübenschnitzel nicht melassiert sind.

4. Einstreu nach einem der vorstehenden Ansprüche, dadurch gekennzeichnet, daß die Rübenschnitzel mit einem Geruchsüberdecker versehen sind.

5. Einstreu nach Anspruch 4, dadurch gekennzeichnet, daß als Geruchsüberdecker Aromate verwendet werden.

6. Einstreu nach einem der vorstehenden Ansprüche, dadurch gekennzeichnet, daß die Rübenschnitzel mit einer die Oberfläche glättenden und die Saugfähigkeit nicht oder nicht wesentlich reduzierenden Schicht versehen sind.

7. Einstreu nach Anspruch 6, dadurch gekennzeichnet, daß die Rübenschnitzel mit einer Gelatineschicht überzogen sind.

8. Einstreu nach einem der vorstehenden Ansprüche, dadurch gekennzeichnet, daß die Rübenschnitzel zu Pellets verpreßt sind.

9. Verfahren zur Herstellung von Einstreu aus einem umweltfreundlich und leicht verrottbaren, nachwachsenden organischen Stoff, dadurch gekennzeichnet, daß
- Rüben geschnitzelt,
- die Rübenschnitzel in erhitztem Wasser ausgelaugt,
- die ausgelaugten Rübenschnitzel durch Auspressen vorgetrocknet,
- die vorgetrockneten Rübenschnitzel in einem erhitzten Luft- oder Gasstrom endgetrocknet und
- die endgetrockneten Rübenschnitzel pelletiert werden.

10. Verfahren nach Anspruch 9, dadurch gekennzeichnet, daß die ausgepreßten Rübenschnitzel in einem Trommeltrockner endgetrocknet werden.

11. Verfahren nach Anspruch 9 oder 10, dadurch gekennzeichnet, daß die Endtrocknung in einem Rauchgasstrom erfolgt.

12. Verfahren nach einem der Ansprüche 9 bis 11, dadurch gekennzeichnet, daß die endgetrockneten Rübenschnitzel unter Zugabe von Wasser pelletiert werden.

13. Verfahren nach einem der Ansprüche 9 bis 12, dadurch gekennzeichnet, daß die Rübenschnitzel in einer Kollerpresse pelletiert werden.

14. Verfahren nach einem der Ansprüche 9 bis 13, dadurch gekennzeichnet, daß die endgetrockneten Rübenschnitzel nach ihrem Erkalten und vor ihrem Pelletieren erwärmt werden.

15. Verfahren nach einem der Ansprüche 9 bis 14, dadurch gekennzeichnet, daß die Pellets nachgetrocknet werden.

16. Verfahren nach einem der Ansprüche 9 bis 15, dadurch gekennzeichnet, daß die Rübenschnitzel vor dem Pelletieren aromatisiert werden.
